# EUROPÄISCHE PATENTANMELDUNG

(11) **EP 2 253 663 A1**
(43) Veröffentlichungstag der Anmeldung: **24.11.2010**
(21) Anmeldenummer: 10162872.5
(22) Anmeldetag: 14.05.2010
(51) Int. Cl.: C08L 3/02, C08L 97/02, C09J 103/02, B27N 1/00, B27N 3/00, C08K 5/21, C08L 25/08, C08L 61/30

(54) **Verfahren zur Herstellung eines Bindemittels sowie Verfahren zur Herstellung eines Formkörpers**

(30) Priorität: 15.05.2009 DE 102009021555
(71) Anmelder: AGM Mader GmbH, 85221 Dachau (DE)
(72) Erfinder: Mader, Heinz B., 85221, Dachau (DE)
(74) Vertreter: Seidel, Marcus

(57) **Zusammenfassung**

Die Erfindung betrifft ein Verfahren zur Herstellung eines Bindemittels, insbesondere für die Herstellung von Formkörpern für die Bau- oder Möbelindustrie, wobei Wasser und Stärke unter Erhitzen auf eine Temperatur von mindestens 90 °C zu einer Wasser-Stärke-Dispersion vermischt werden, die Dispersion auf eine Temperatur von weniger als etwa 50°C abgekühlt wird und die Dispersion mit einem Copolymer zu einer Wasser-Stärke-Copolymer-Emulsion vermischt wird. Ferner betrifft die Erfindung ein Verfahren zur Herstellung eines Formkörpers, wobei ein Gemenge, das Naturfasern und/oder Kunstfasern umfasst, mit dem hergestellten Bindemittel zu einer Formmasse vermischt wird, wobei der Feuchtegehalt der Formmasse bei einer Temperatur von etwa 100°C bis etwa 150°C reduziert und dabei unter Anwendung von Druck aus der Formmasse der Formkörper geformt wird.

## Beschreibung

Die vorliegende Erfindung betrifft ein Verfahren zur Herstellung eines Bindemittels sowie ein Verfahren zur Herstellung eines Formkörpers. Das Bindemittel und der Formkörper werden vorzugsweise für die Bau- oder Möbelindustrie verwendet.

In der Bau- oder Möbelindustrie sind Spanplatten oder Holzfaserplatten weit verbreitet. Hierzu werden üblicherweise Holzwerkstoffe in Form von Holzspänen oder Holzfasern, beispielsweise aus Holzabfällen, verwendet und mit natürlichen oder synthetischen Bindemitteln vermischt und anschließend zu einem Formkörper, insbesondere einer Faserplatte, verpresst.

Als Bindemittel für derartige Holzfaserplatten werden häufig Harze mit einen beträchtlichen Anteil an Formaldehyd herangezogen. Zudem haben die eingesetzten Holzwerkstoffe den Nachteil, dass aufgrund der hygroskopischen Eigenschaften von Holz ein starkes Quellen auftreten kann. Bei einer anschließenden Trocknung tritt aufgrund der ungleichmäßigen Faserstruktur ein ungleichmäßiges Schwinden des Holzes ein, wodurch sich dann Risse ausbilden können. Des Weiteren sind für die Herstellung der Formkörper hohe Temperaturen erforderlich, so dass zum einen ein hoher Energiebedarf für die Bereitstellung der Temperaturen und zum anderen ein hoher Energiebedarf zum späteren Abkühlen der gepressten Formkörper notwendig ist. Ohne ein geregeltes Abkühlen kommt es häufig zu einem Verziehen der Formkörper, insbesondere bei Platten. Aufgrund der schädlichen Auswirkungen des Formaldehyds und der hohen Materialkosten für das Bindemittel werden ferner Lösungen gesucht, die ein kostengünstigeres und schnelles Herstellen des Bindemittels und des Formkörpers ermöglichen. Zudem sollen die Formkörper in Form von Bauteilen, insbesondere Platten, für die Verwendung in der Bau- oder Möbelindustrie eine ausreichende mechanische Festigkeit und eine dem Verwendungszweck entsprechende Langlebigkeit aufweisen.

Der Erfindung liegt die **Aufgabe** zugrunde, einfach und kostengünstig herstellbare Formkörper, insbesondere für die Bau- oder Möbelindustrie, und ein hierfür geeignetes Bindemittel herstellen zu können, wobei die verschiedenen Eigenschaften derartiger Formkörper und des Bindemittels hinsichtlich möglichst vieler der oben genannten Anforderungen einzeln oder zusammen verbessert werden können.

Zur **Lösung** dieser Aufgabe wird ein Verfahren zur Herstellung eines Bindemittels, insbesondere für die Herstellung von Formkörpern für die Bau- oder Möbelindustrie, vorgeschlagen, bei dem Wasser und Stärke unter Erhitzen auf eine Temperatur von mindestens 90 °C zu einer Wasser-Stärke-Dispersion vermischt werden, die Dispersion auf eine Temperatur von weniger als etwa 50 °C abgekühlt wird und die Dispersion mit einem Copolymer zu einer Wasser-Stärke-Copolymer-Emulsion vermischt wird.

Der in der vorliegenden Anmeldung verwendete Begriff "Dispersion" kann auch durch die Begriffe "Lösung", "Emulsion" oder "Suspension" ersetzt werden. Die unter Erhitzen vermischte Wasser-Stärke-Dispersion kann auch als wässrige Stärkedispersion bezeichnet werden.

Bei natürlicher Stärke handelt es sich um ein pflanzliches Produkt und einen nachwachsenden Rohstoff, der beispielsweise aus Kartoffeln, Mais, Getreide (z.B. Weizen) und/oder Reis gewonnen wird. Ferner handelt es sich um einen in großen Mengen verfügbaren, nachwachsenden und biologisch abbaubaren Rohstoff. Vorteilhafterweise wird die Stärke in Pulverform verwendet.

Überraschenderweise wurde herausgefunden, dass die Kombination der Wasser-Stärke-Dispersion mit Copolymer gut verträglich ist, in einer wässrigen Lösung bzw. Phase zur Verfügung gestellt werden kann und somit in produktionstechnischer Hinsicht vorteilhaft in Großanlagen eingesetzt werden kann. Ferner kann die Wasser-Stärke-Copolymer-Zusammensetzung als das hergestellte Bindemittel im Wesentlichen oder zu großen Anteilen formaldehydfrei und kostengünstig hergestellt werden.

Als weitere Vorteile bei der Verwendung von Stärke hat sich die gute Mischbarkeit der wässrigen Stärkedispersion mit dem Copolymer herausgestellt. Das Copolymer ist gut in die wässrige Stärkedispersion einmischbar und die erhaltene Dispersion ist bis etwa 220°C kurzzeitig beständig.

Bei einer bevorzugten Ausführungsform werden das Wasser und die Stärke unter Erhitzen auf eine Temperatur von mindestens 90 °C bei atmosphärischem Druck zu der Wasser-Stärke-Dispersion vermischt. Für den Fall, dass beim Vermischen andere Druckverhältnisse herrschen, sind diese zu berücksichtigen und es können daran angepasste Temperaturen gewählt werden, um den gewünschten Zweck erreichen zu können.

Weiterhin konnte in einer Reihe von Versuchen festgestellt werden, dass bei einer Verwendung des erzeugten Bindemittels angenehme Oberflächen, insbesondere an den Rand- oder Schnittflächen des Formkörpers, erzeugt werden können, was sich insbesondere in der Möbelindustrie als vorteilhaft erweist.

In einer bevorzugten Variante des Verfahrens kann ausschließlich Copolymer zu der Wasser-Stärke-Dispersion hinzugemischt werden, dass heißt es werden keine weiteren synthetischen Bindemittelmaterialien beigemengt.

Vorzugsweise enthält das Copolymer einen Feststoffanteil von etwa 30 Gew.-% bis etwa 50 Gew.-%, vorzugsweise von etwa 35 Gew.-% bis etwa 45 Gew.-%, und einen Wasseranteil von etwa 50 Gew.-% bis etwa 70 Gew.-%, vorzugsweise von etwa 55 Gew.-% bis etwa 65 Gew.-%. Beispielsweise enthält das Copolymer einen Feststoffanteil von etwa 42 Gew.-% und einen Wasseranteil von etwa 58 Gew.-%.

Bei einer bevorzugten Weiterbildung wird als Copolymer ein Acrylat-Copolymer, insbesondere ein Acrylat-Styrol-Copolymer, verwendet. Diese Materialien haben sich bei den durchgeführten Versuchen als besonders gut verträglich und mit der Wasser-Stärke-Dispersion mischbar herausgestellt.

Bei einer bevorzugten Ausführungsform werden ein Aminoplast, insbesondere Harnstoff-Formaldehyd-Harz, Melamin-Formaldehyd-Harz und/oder Melamin-Harnstoff-Harz, und/oder ein Phenoplast, insbesondere Phenol-Formaldehyd-Harz, zu der Wasser-Stärke-Copolymer-Emulsion hinzugemischt. Auf diese Weise können die mechanischen und haptischen Eigenschaften den Anforderungen angepasst werden, wobei der Formaldehyd-Anteil im hergestellten Formkörper dadurch gering gehalten werden kann. Neben einem geringen Formaldehydgehalt wird durch die geringen erforderlichen Temperaturen beim Herstellen von Formkörpern ein geringerer Energieaufwand möglich, wobei zugleich noch eine gute Produktionsgeschwindigkeit erreicht wird.

Bevorzugt wird das Copolymer, das Aminoplast und/oder das Phenoplast bei einer Temperatur von mindestens etwa 40 °C, vorzugsweise bei einer Temperatur von größer als etwa 45 °C bis kleiner als etwa 100 °C, hinzugemischt. Besonders geeignet sind Temperaturen in einem Bereich von etwa 45 °C bis etwa 60°C.

Die Mengenanteile des Aminoplast und/oder Phenoplast können je nach jeweiligem Materialpreis abgestimmt werden, um einen bestimmten Preisrahmen erfüllen zu können. Vorzugsweise kann der Gewichtsanteil von Aminoplast und/oder Phenoplast etwa 30 bis etwa 70 Gew.-% betragen. Weiterhin können beispielsweise etwa 1 Gew.-% bis etwa 50 Gew.-%, vorzugsweise etwa 10 Gew.-% bis etwa 25 Gew.-%, jeweils bezogen auf 100 Teile der Wasser-Stärke-Copolymer-Emulsion hinzugemischt werden.

Weiterhin ist es möglich die Mengenanteile von Wasser, Stärke und/oder Copolymer in stark unterschiedlichen Verhältnissen über einen großen Schwankungsbereich miteinander zu vermischen. Je nach Mengenanteilen können hier auch die mechanischen Eigenschaften des Formkörpers gesteuert werden.

In einer vorteilhaften Variante hat sich herausgestellt, dass die Stärke in einem Mengenverhältnis von bis zu 100 Teilen Wasser zu 4 Teilen Stärkepulver beigemischt werden kann.

Weiterhin können die Beimengungsverhältnisse der Einzelbestandteile von der späteren Produktionsweise zur Herstellung des Formkörpers, insbesondere in Hinblick auf die Vermengung des Bindemittels mit dem Naturfasern umfassenden Gemenge (Füllstoff) der Formkörper abhängen.

Wenn der herzustellende Formkörper bei der bestimmungsgemäßen späteren Verwendung beispielsweise einer feuchten Umgebung ausgesetzt ist (z. B. Küchenmöbel), könnte die Stärke aufgrund ihrer wasserbindenden Eigenschaft Feuchtigkeit der feuchten Luft aufnehmen. Um dies zu verhindern, kann für derartige Formkörper der Copolymeranteil bei der Herstellung erhöht werden.

In Hinblick auf die Mengenverhältnisse von Wasser und Stärke bei der Wasser-Stärke-Dispersion ist es bevorzugt vorgesehen, dass der Gewichtsanteil von Wasser von etwa 90 Gew.-% bis etwa 99 Gew.-%, vorzugsweise von etwa 95 Gew.-% bis etwa 98 Gew.-%, und der Gewichtsanteil von Stärke von etwa 1 Gew.-% bis etwa 10 Gew.-%, vorzugsweise von etwa 2 Gew.-% bis etwa 4 Gew.-%, beträgt.

Bei einer weiteren bevorzugten Ausführungsform beträgt der Gewichtsanteil von Copolymer beim Vermischen mit der Wasser-Stärke-Dispersion von etwa 20 Gew.-% bis etwa 80 Gew.-%, vorzugsweise von etwa 40 Gew.-% bis etwa 60 Gew.-%, jeweils bezogen auf die Wasser-Stärke-Dispersion.

Bei einer bevorzugten Ausführungsform wird eine Harnstofflösung und/oder eine Wachsdispersion hinzugegeben. Der Gewichtsanteil des Harnstofflösung beträgt vorzugsweise bis etwa 60 Gew.-%, insbesondere vorzugsweise etwa 25 Gew.-% bis etwa 45 Gew.-%. Der Gewichtsanteil der Wachsdispersion beträgt vorzugsweise bis etwa 10 Gew.-%, insbesondere vorzugsweise etwa bis etwa 5 Gew.-%

Vorzugsweise erfolgt das Vermischen von Wasser und Stärke zu der Wasser-Stärke-Dispersion bei Raumtemperatur, insbesondere unter kontinuierlichem Rühren. Als besonders vorteilhaft hat sich herausgestellt, wenn nach der Zugabe von Stärkepulver zu Wasser ein Erhitzen, insbesondere ein kontinuierliches Erhitzen unter ständigem Rühren bis etwa 100°C und anschließend ein kurzes Aufkochen der wässrigen Lösung erfolgt. Das Erhitzen der Mischung aus Stärke und Wasser erfolgt vorzugsweise auf eine Temperatur bis etwa 110 °C, vorzugsweise auf eine Temperatur von etwa 95 °C bis etwa 100 °C. Bei einer weiteren bevorzugten Ausführungsform erfolgt das Abkühlen der Dispersion auf eine Temperatur von weniger als etwa 40 °C.

Weiterhin wird zur **Lösung** der oben genannten Aufgabe ein Verfahren zur Herstellung eines Formkörpers, insbesondere für die Bau- oder Möbelindustrie, vorgeschlagen, wobei ein Gemenge, das Naturfasern und/oder Kunstfasern umfasst, mit dem nach einem der Ansprüche 1 bis 10 hergestellten Bindemittel zu einer Formmasse vermischt wird, und wobei der Feuchtegehalt der Formmasse bei einer Temperatur von etwa 100°C bis etwa 150°C reduziert und unter Anwendung von Druck aus der Formmasse der Formkörper geformt wird.

Ferner betrifft die Erfindung ein Verfahren, dass das Verfahren zur Herstellung des Bindemittels gemäß einem der Ansprüche 1 bis 10 und das Verfahren zur Herstellung des Formkörpers gemäß einem der Ansprüche 11 bis 15 miteinander kombiniert beziehungsweise verbindet.

Unter dem Begriff "Formkörper" wird insbesondere ein Körper verstanden, der durch ein entsprechend ausgebildetes Formwerkzeug, beispielsweise mittels Extrusion oder durch Pressen, hergestellt werden kann. Vorzugsweise werden plattenförmige Formkörper oder Bauteile hergestellt.

Durch den Einsatz des oben beschriebenen Bindemittels in Form der Wasser-Stärke-Copolymer-Zusammensetzung kann der Formkörper mit einem geringem Anteil Formaldehyd oder zu großen Anteilen formaldehydreduziert oder sogar im Wesentlichen formaldehydfrei und kostengünstig hergestellt werden. Weiterhin ist eine im Vergleich zum Stand der Technik geringere Temperatur für das Formen beziehungsweise Pressen erforderlich, so dass zum einen ein geringerer Energieaufwand für das Formen und auch nachträglich weniger Energieaufwand zum Kühlen erforderlich ist, wobei zugleich noch eine gute Produktionsgeschwindigkeit erreicht wird.

Bei einer bevorzugten Verfahrensvariante werden für das Gemenge als Naturfasern Bambusbestandteile, Holzbestandteile und/oder Mineralbestandteile, insbesondere in Form von Partikeln (z.B. Späne oder Mehl) oder Fasern, verwendet.

Vorteilhafterweise kann das Gemenge einen Feuchtegehalt aufweisen, der höchstens etwa 20 Gew.-%, vorzugsweise höchstens etwa 15 Gew.-% beträgt.

Bei einer weiteren bevorzugten Ausführungsform wird eine Formmasse verwendet, die vor dem Formen beziehungsweise vor dem Formprozess einen Feuchtegehalt von etwa 2 Gew.-% bis etwa 20 Gew.-%, vorzugsweise von etwa 5 Gew.-% bis etwa 12 Gew.-%, aufweist.

Weiterhin ist es vorteilhaft, wenn der Formkörper nach dem Formen beziehungsweise dem Formprozess einen Restfeuchtegehalt von kleiner als etwa 10 Gew.-%, insbesondere von kleiner als etwa 5 Gew.-%, hat.

Um beim Formprozess ein leichteres Austreiben des Wassers aus der Formmasse zu ermöglichen, wird entstehender Wasserdampf abgeleitet. Dieses Ableiten von Wasserdampf geschieht vorzugsweise unter Verwendung einer Lochplatte oder eines Streckbleches. Das Formen beziehungsweise der Formprozess erfolgt vorzugsweise durch Pressen oder Extrudieren.

In bevorzugter Ausgestaltung wird für das Gemenge ein Gemisch umfassend Holz- und/oder Bambusbestandteile, insbesondere in Form von Fasern, Partikeln oder Spänen, eingesetzt. Die Bestandteile des Gemenges werden vorzugsweise durch Aufbringen des Bindemittels auf die Bestandteile oder Eintauchen der Bestandteile in das Bindemittel mit diesem versehen, insbesondere durch Beleimen oder Aufsprühen.

Der Feuchtegehalt der Bestandteile sollte etwa 10 Gew.-% nicht überschreiten, damit der bei der Verarbeitung entstehende Dampfdruck nicht zu Beeinträchtigungen führt.

Nachfolgend wird ein Ausführungsbeispiel eines Verfahrens zur Herstellung eines Bindemittels sowie eines Verfahrens zur Herstellung eines Formkörpers für die Bau- oder Möbelindustrie beschrieben. Es handelt sich also um zwei einzelne Verfahren, die separat voneinander oder in direkter Abfolge als ein Verfahren durchgeführt werden können.

In einem ersten Schritt wird eine Menge von etwa 10 bis 40 g Stärkepulver, beispielsweise Maisstärke, in 1 I kaltem Wasser durch Rühren kalt vermischt bis das Stärkepulver gleichmäßig in dem Wasser gelöst ist. Hierbei wird die Lösung unter ständigem Rühren bis auf eine Temperatur von etwa 95 °C bis etwa 100°C, insbesondere auf 98 °C, erhitzt. In bevorzugter Ausgestaltung wird diese Wasser-Stärke-Dispersion kurz aufgekocht. Durch das Vermischen und Erhitzen quillt die Stärke auf. Anschließend wird die Dispersion auf eine Temperatur in einem Bereich von etwa 20°C bis etwa 40°C abgekühlt. Auf diese Weise erhält man bei einer Stärkemenge von beispielsweise etwa 40 g eine Wasser-Stärke-Dispersion mit einem Stärkeanteil von etwa 4 Gew.-%.

Nach dem Abkühlen kann jede beliebige Menge der Wasser-Stärke-Dispersion mit Copolymer, vorzugsweise in einem Verhältnis von 1:1, vermischt werden, so dass eine Wasser-Stärke-Copolymer-Dispersion erhalten wird.

Als vorteilhaft hat sich die Verwendung eines Acrylat-Copolymers, insbesondere eines Acrylat-Styrol-Copolomers, herausgestellt. Hier wird nach Vermischen eine Wasser-Stärke-Copolymer-Dispersion als Bindemittel erhalten.

Bei bevorzugten Ausführungsformen A bis F können folgende Zusammensetzungen für das Bindemittel verwendet werden, wobei die einzelnen Bestandteile in Gewichtsprozent angegeben sind:

| **Bestandteile / Beispiele A bis F** | **A** | **B** | **C** | **D** | **E** | **F** |
|---|---|---|---|---|---|---|
| Wasser-Stärke-Dispersion | 34 | 20 | 30 | 40 | 60 | 28 |
| Copolymer | 33 | 40 | 30 | - | - | 30 |
| Aminoplast und/oder Phenoplast, beispielsweise Melamin-Harnstoff-Harz | 33 | 40 | 40 | 60 | - | - |
| Harnstofflösung | - | - | - | - | 36 | 40 |
| Wachsdispersion | - | - | - | - | 4 | 2 |

Das Mischen der in obiger Tabelle angegebenen Bestandteile des jeweiligen Bindemittels erfolgt vorzugsweise bei einer Temperatur von mindestens 40 °C, vorzugsweise bei einer Temperatur von größer als 45 °C bis kleiner als 100 °C. Vorzugsweise kann bei den Ausführungsbeispielen E und F das Mischen auch kalt erfolgen, d.h. beispielsweise bei Raumtemperatur.

Anschließend kann das so hergestellte Bindemittel für die Herstellung eines plattenförmigen Formkörpers weiterverwendet werden. Hierzu werden Holzfasern und/oder Bambusfasern, vorzugsweise in einem Verhältnis 1:1, zu einem Gemenge und anschließend mit dem oben genannten Bindemittel zu einer Formmasse vermischt. Das Vermengen des Bindemittels mit dem Gemenge erfolgt beispielsweise durch Aufsprühen des Bindemittels (Blowline) auf die Gemengebestandteile. Der Anteil des Bindemittels bezogen auf den Anteil des Gemenges beträgt beispielsweise etwa 10 Gew.-% bis etwa 30 Gew.-%, vorzugsweise etwa 15 Gew.-% bis etwa 20 Gew.-% . Um den Wasseranteil in dem Gemisch aus Fasergemenge und Bindemittel weiter zu reduzieren, wird die Formmasse mit einer Temperatur von etwa 100°C bis etwa 180°C, vorzugsweise mit einer Temperatur von etwa 120°C bis etwa 150°C, beaufschlagt. Insbesondere kann eine Temperatur aufgebracht werden, so dass die Temperatur im Kern des plattenförmigen Körpers etwa 140 °C bis etwa 180 °C beträgt. Dabei wird unter Anwendung von Druck, insbesondere durch Pressen oder Extrudieren, aus der Formmasse der Formkörper geformt. Nach dem Formprozess kann der erhaltene Formkörper nachgetrocknet werden, insbesondere bei Raumtemperatur, um die Restfeuchte gering zu halten. Bei dem Pressvorgang zum Formen des Formkörpers hat sich der Einsatz einer Lochplatte oder eines Streckbleches als vorteilhaft erwiesen, um den Wasserdampf leichter abführen zu können.

Die oben genannten Anteile der unterschiedlichen Bestandteile des Gemenges werden je nach Einsatzzweck des Formkörpers gewählt. In diesem Zusammenhang haben sich Bambusfasern als vorteilhaft erwiesen, da diese Bambusfasern wenig oder kein Wasser aufnehmen und etwaiges Wasser schneller aus diesen Bambusfasern ausgetrieben werden kann. Holzfasern ermöglichen die Ausbildung einer guten Vernetzung des Formkörperkernes, d.h. gute mechanische Eigenschaften, und die Ausbildung glatter Oberflächen. Bei Bedarf können nach Einbringen des Gemenges beidseitig auf den Faserkern Lagen beziehungsweise Schichten aus anderen Materialien, wie insbesondere Bambusblätter oder textile Bahnen, aufgelegt und durch den Pressvorgang mit dem Faserkern verbunden werden. Um den Brandschutz derartiger Formkörper zu erhöhen, kann beispielsweise ein textiles Glasgewebe aufgebracht werden. Bei dem oben genannten Formprozess beträgt die Temperatur vorzugsweise etwa zwischen 100°C und etwa 150°C. Bei diesen Temperaturen kann die Stärke in vorteilhafter Weise aushärten und der enthaltene Wasseranteil wird auf einfache Weise ausgetrieben.

## Patentansprüche

1. Verfahren zur Herstellung eines Bindemittels, insbesondere für die Herstellung von Formkörpern für die Bau- oder Möbelindustrie, wobei das Verfahren folgende Schritte umfasst:
Vermischen von Wasser und Stärke unter Erhitzen auf eine Temperatur von mindestens 90 °C zu einer Wasser-Stärke-Dispersion,
Abkühlen der Dispersion auf eine Temperatur von weniger als etwa 50 °C und
Vermischen der Dispersion mit einem Copolymer zu einer Wasser-Stärke-Copolymer-Emulsion.

2. Verfahren nach Anspruch 1, **dadurch gekennzeichnet, dass** ausschließlich Copolymer zu der Wasser-Stärke-Dispersion hinzugemischt wird.

3. Verfahren nach einem der Ansprüche 1 oder 2, **dadurch gekennzeichnet, dass** als Copolymer ein Acrylat-Copolymer, insbesondere ein Acrylat-Styrol-Copolymer, verwendet wird.

4. Verfahren nach einem der vorhergehenden Ansprüche, **dadurch gekennzeichnet, dass** ein Aminoplast, insbesondere Harnstoff-Formaldehyd-Harz, Melamin-Formaldehyd-Harz und/oder Melamin-Harnstoff-Harz, und/oder ein Phenoplast, insbesondere Phenol-Formaldehyd-Harz, zu der Wasser-Stärke-Copolymer-Emulsion hinzugemischt werden.

5. Verfahren nach einem der vorhergehenden Ansprüche, **dadurch gekennzeichnet, dass** das Copolymer, das Aminoplast und/oder das Phenoplast bei einer Temperatur von mindestens 40 °C, vorzugsweise bei einer Temperatur von größer als 45 °C bis kleiner als 100 °C, hinzugemischt wird.

6. Verfahren nach Anspruch 4 oder 5, **dadurch gekennzeichnet, dass** der Gewichtsanteil von Aminoplast und/oder Phenoplast etwa 30 bis etwa 70 Gew.-% beträgt.

7. Verfahren nach einem der vorhergehenden Ansprüche, **dadurch gekennzeichnet, dass** bei der Wasser-Stärke-Dispersion der Gewichtsanteil von Wasser von etwa 90 Gew.-% bis etwa 99 Gew.-%, vorzugsweise von etwa 95 Gew.-% bis etwa 98 Gew.-%, und der Gewichtsanteil von Stärke von etwa 1 Gew.-% bis etwa 10 Gew.-%, vorzugsweise von etwa 2 Gew.-% bis etwa 4 Gew.-%, beträgt.

8. Verfahren nach einem der vorhergehenden Ansprüche, **dadurch gekennzeichnet, dass** beim Vermischen mit der Wasser-Stärke-Dispersion der Gewichtsanteil von Copolymer von etwa 20 Gew.-% bis etwa 80 Gew.-%, vorzugsweise von etwa 30 Gew.-% bis etwa 60 Gew.-%, bezogen auf die Wasser-Stärke-Dispersion beträgt.

9. Verfahren nach einem der vorhergehenden Ansprüche, **dadurch gekennzeichnet, dass** eine Harnstofflösung und/oder eine Wachsdispersion hinzugegeben wird.

10. Verfahren nach einem der vorhergehenden Ansprüche, **dadurch gekennzeichnet, dass** das Erhitzen der Mischung aus Stärke und Wasser auf eine Temperatur bis etwa 110 °C, vorzugsweise von etwa 95 °C bis etwa 100 °C, erfolgt.

11. Verfahren zur Herstellung eines Formkörpers, insbesondere für die Bau- oder Möbelindustrie,
wobei ein Gemenge, das Naturfasern und/oder Kunstfasern umfasst, mit dem nach einem der Ansprüche 1 bis 10 hergestellten Bindemittel zu einer Formmasse vermischt wird,
und wobei der Feuchtegehalt der Formmasse bei einer Temperatur von etwa 100 °C bis etwa 150 °C reduziert und dabei unter Anwendung von Druck aus der Formmasse der Formkörper geformt wird.

12. Verfahren nach Anspruch 11, **dadurch gekennzeichnet, dass** für das Gemenge als Naturfasern Bambus-, Holz- und/oder Mineralbestandteile, insbesondere in Form von Partikeln oder Fasern, verwendet werden.

13. Verfahren nach einem der Ansprüche 11 oder 12, **dadurch gekennzeichnet, dass** das Gemenge einen Feuchtegehalt aufweist, der höchstens etwa 20 Gew.-%, vorzugsweise höchstens etwa 15 Gew.-% beträgt.

14. Verfahren nach einem der Ansprüche 11 bis 13, **dadurch gekennzeichnet, dass** die Formmasse vor dem Formprozess einen Feuchtegehalt von etwa 2 Gew.-% bis etwa 20 Gew.-%, vorzugsweise von etwa 5 Gew.-% bis etwa 12 Gew.-%, aufweist.

15. Verfahren nach einem der Ansprüche 11 bis 14, **dadurch gekennzeichnet, dass** der Formkörper nach dem Formprozess einen Restfeuchtegehalt von kleiner als etwa 10 Gew.-%, insbesondere von etwa kleiner als 5 Gew.-%, hat.
